# EUROPEAN PATENT APPLICATION

(11) **EP 4 290 723 A1**
(43) Date of publication of application: **13.12.2023**
(21) Application number: 22178304.6
(22) Date of filing: 10.06.2022
(51) Int. Cl.: H02J 1/02, H02M 1/15, C25B 9/65

(54) **POWER CONVERSION SYSTEM FOR SUPPLYING AN ELECTROLYSER**

(71) Applicant: ABB SCHWEIZ AG, 5400 Baden (CH)
(72) Inventor: ABDELHAKIM, Ahmed, Västerås (SE); POSTIGLIONE, Cicero, Västerås (SE); DROFENIK, Uwe, Zürich (CH); VIITANEN, Tero, Vantaa (FI); CANALES, Francisco, Baden-Dättwil (CH); ROUTIMO, Mikko, Espoo (FI); HUJU, Kalle, Kirkkonummi (FI); BISKOPING, Matthias, Hirschberg (DE)
(74) Representative: Kransell & Wennborg KB

(57) **Abstract**

A power conversion system (1) for powering an electrolyser (9), comprising: a rectifier (5) having a DC side (6) comprising a first DC terminal (5d) and a second DC terminal (5e), and an active filter unit (7) comprising a first terminal (7a) connected to the first DC terminal (5d) and a second terminal (7b) connected to the second DC terminal (5e).

## Description

### TECHNICAL FIELD

The present disclosure generally relates to power conversion systems, especially for powering electrolysers.

### BACKGROUND

Hydrogen economy has become an increasingly popular topic. There is a consensus that green hydrogen production is the only way to enable such economy to prosper. Today, approximately 95% of the hydrogen production is classified as grey, meaning it comes directly from fossil fuel origin and it is a carbon dioxide (CO2) intensive activity. Blue hydrogen is the addition of carbon storage to the current way of production, substantially reducing the CO2 footprint. However, green hydrogen produced by electrolysis with energy from renewable sources is the only way to produce hydrogen sustainably.

In order to meet the demand for hydrogen, large-scale electrolyser plants are planned for deployment in the near future. Electrolysers use low voltage direct current (DC) to circulate current through the water and break hydrogen and oxygen molecules apart from the water. Therefore, a large-scale electrolyser plant consumes high currents at low voltage.

Current electrolyser plants make use of an uncontrollable diode bridge or thyristors to enable voltage control of the rectified voltage. However, current ripple increases membrane degradation in the electrolytic cells of the electrolysers. Moreover, voltage and current ripples on the dc-side of the rectifier reduce the efficiency of hydrogen production.

J. Koponen, V. Ruuskanen, A. Kosonen, M. Niemelä and J. Ahola, "Effect of Converter Topology on the Specific Energy Consumption of Alkaline Water Electrolyzers," in IEEE Transactions on Power Electronics, vol. 34, no. 7, pp. 6171-6182, July 2019, doi: 10.1109/TPEL.2018.2876636., discloses that a transistor-based converter topology can offer up to 14% lower stack specific energy consumption than a 6-pulse thyristor rectifier and up to 9% lower stack specific energy consumption than a 12-pulse thyristor rectifier in a power range of 1 MW (5 kA and 200V). Therefore, the introduction of a buck converter gives full controllability of the DC voltage and current and with benefits to both energy consumption and lifetime of the system, but at high cost, as the converter has to be designed for full power. In addition, the buck converter efficiency is known to be lower than that of thyristor-based converters, although system efficiency tends to be higher, and from the total system perspective it is not clear if there is advantage of one over the other.

EP2963761 A1 discloses a rectifier connected to a number of series-connected electrolysers. According to one example described in EP2963761 A1 it is preferred to remove voltage ripple from the rectifier on the load by the converters operating as active filters. This however requires dimensioning of the rectifier filter components taking the high current involved into account.

### SUMMARY

In view of the above, a general object of the present disclosure is to provide a power conversion system which solves or at least mitigates problems of the prior art.

There is hence according to a first aspect of the present disclosure provided a power conversion system for powering an electrolyser, comprising: a rectifier having a DC side comprising a first DC terminal and a second DC terminal, and a first active filter unit comprising a first terminal connected to the first DC terminal and a second terminal connected to the second DC terminal.

The rectifier is thus parallel connected with an electrolyser when the electrolyser is connected to the DC side of the rectifier. The current flowing through the first active filter unit is therefore much smaller than in the case of EP2963761 A1. In particular, only a small percentage of the total energy is processed by the first active filter unit. The active filter unit can therefore be made significantly more compact.

The present configuration also makes the size of the first active filter unit significantly smaller than a passive filter unit.

The first active filter unit is configured to compensate the ripple introduced on the DC side by the rectifier. The electrolyser will therefore have an improved efficiency and the lifetime of the electrolyser may be increased because it increases the lifetime of the electrodes and membranes of the electrolytic cells.

The rectifier may be configured to delivery power in the megawatt range.

According to one embodiment the rectifier is a low voltage rectifier. With low voltage is herein meant a voltage at most 1.5 kV, such as at most 1 kV.

According to one embodiment the rectifier is a thyristor rectifier.

The thyristor rectifier may for example be a 6-pulse, 12-pulse, or 18-pulse rectifier.

Thyristor-based rectifiers generate a substantial ripple on the DC side compared to transistor-based rectifiers. Reduction of this ripple thus greatly improves the operation of the electrolyser.

According to one embodiment the rectifier is a diode rectifier.

Diode-based rectifiers generate a substantial ripple on the DC side compared to transistor-based rectifiers. Reduction of this ripple thus greatly improves the operation of the electrolyser.

The diode rectifier may for example be a 6-pulse, 12-pulse, or 18-pulse rectifier.

In general, an N-pulse rectifier will have a DC side voltage with a current ripple that has a frequency of N times the electric grid frequency.

According to one embodiment the rectifier is a three-phase rectifier. The rectifier thus has an AC side configured to be connected to three electric phases.

According to one embodiment the power conversion system comprises a second active filter unit connected in parallel with the first active filter unit.

By using several active filter units operating in parallel, the processed power per active filter unit may be made smaller.

Further, the design allows to operate the active filter units in phase to reduce the filter requirements and dynamic response without increasing the switching frequencies. In addition, it adds redundancy which guarantees the continuous operation of the active filters, even in the event of possible failures.

The power conversion system could according to one example comprise more than two active filter units connected in parallel.

According to one embodiment each active filter unit comprises a half-bridge circuit including an LC tank. Such active filter units have much lower power rating than the rectifier and help smoothen the DC side voltage and current, providing more controllability and higher efficiency to the electrolyser.

The inductor of an active filter unit is operated at significantly higher frequencies than an inductor of a passive filter and can therefore be made significantly smaller, e.g., in the order of 50 times smaller. An active filter unit can therefore be made much more cost efficient.

Each active filter unit may be a DC/DC converter.

The half-bridge circuit comprising the LC tank is one example of a DC/DC converter.

According to one embodiment the half-bridge circuit comprises transistors, such as metal-oxide semiconductor field-effect transistors, MOSFET.

One embodiment comprises a control unit configured to, based on a DC side voltage, control each active filter unit to generate a current waveform with opposite phase relative to the DC side voltage to compensate for ripple on the DC side voltage. The current waveform is thus phase inverted relative to the ripple on the DC side voltage.

The DC side of the rectifier forms a DC link, and each active filter unit is configured to inject the current waveform to the DC link.

The control unit may be configured to control the amplitude of the current waveform based on the amplitude of the voltage ripple on the DC side voltage. The control unit may for example be configured to control each active filter unit to generate the current waveform with the same amplitude as the voltage ripple and with inverted phase to cancel out the voltage ripple.

There is according to a second aspect of the present disclosure provided an electrolyser system comprising: the power conversion system of the first aspect, and an electrolyser connected in parallel with each active filter unit.

The electrolyser is connected to the first DC terminal and the second DC terminal.

The last component of the power conversion system before the electrolyser may be an active filter unit.

The electrolyser may be a high-power electrolyser, for example having a rating of 1 MW or more.

According to one example, the electrolyser system may comprise a DC bus, a plurality of power conversion systems of the first aspect having their respective first DC terminal and second DC terminal connected to the DC bus, and a plurality of electrolysers connected to the DC bus. The power conversion systems may thus power a plurality of electrolysers.

According to a third aspect, there is provided a method of controlling power input to an electrolyser from a power conversion system comprising a rectifier having a DC side comprising a first DC terminal and a second DC terminal, and a first active filter unit comprising a first terminal connected to the first DC terminal and a second terminal connected to the second DC terminal, the first DC terminal and the second DC terminal being connected to the electrolyser, wherein the method comprises: controlling the first active filter unit to generate a current waveform with opposite phase relative to a DC side voltage of the rectifier to compensate for ripple on the DC side voltage.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1. schematically shows a block diagram of an electrolyser system including a power conversion system;
Fig. 2 schematically shows an example of a power conversion system; and
Fig. 3 schematically shows an example of a power conversion system comprising several active filter units.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

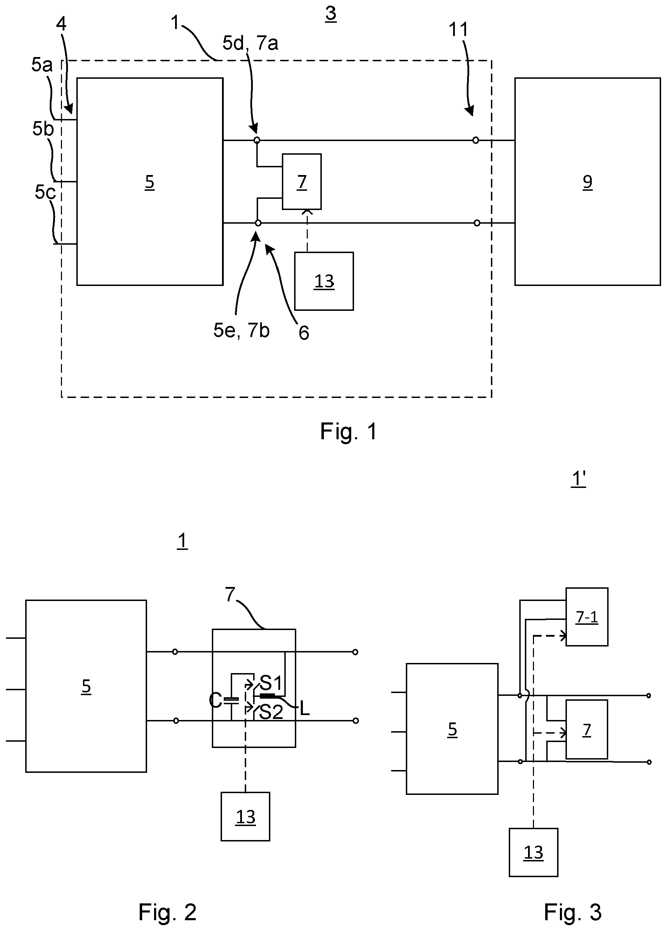

Fig. 1 shows an example of a power conversion system 1. The power conversion system 1 comprises a rectifier 5 and a first active filter unit 7.

The rectifier 5 may for example be a 6-pulse, a 12-pulse, or an 18-pulse rectifier.

The rectifier 5 may be a diode rectifier or a thyristor rectifier.

The rectifier 5 has a plurality of legs. Each leg comprises two semiconducting electronics components which are diodes in the case of a diode rectifier or thyristors in the case of a thyristor rectifier.

The rectifier 5 has an AC side 4. The AC side 4 is provided with input terminals 5a-5c.

The rectifier 5 may be a three-phase rectifier. The rectifier 5 may thus have three input terminals 5a-5c for connecting the rectifier 5 to a three-phase power source or a three-phase electric grid.

The rectifier 5 may be a low voltage rectifier. The rectifier 5 may be configured to rectify low voltage. The rectifier 5 may be configured to output low voltage.

The input terminals 5a-5c may be connected to output terminals of a step-down transformer in case the power source or electric grid is operated at medium voltage, for example up to 66 kV.

The rectifier 5 has a DC side 6. The DC side 6 comprises a first DC terminal 5d and a second DC terminal 5e.

The power conversion system 1 may comprise a control unit 13.

The control unit 13 is configured to obtain a DC side voltage, which is the DC voltage between the first DC terminal 5d and the second DC terminal 5e. The DC voltage contains ripple as a result of the rectification.

The control unit 13 is configured to control the first active filter unit 7 based on the DC side voltage. The control unit 13 is configured to generate a current waveform with opposite phase relative to the DC side voltage to compensate for or cancel out the ripple. The current waveform may have the same magnitude as the ripple, and in this case the current waveform is inverted relative to the ripple.

The first active filter unit 7 is configured to inject the current waveform into a DC link 11 formed between the first DC terminal 5d and the second DC terminal 5e.

The first active filter unit 7 comprises semiconductor switches such transistors. The transistors may for example be MOS-FETs or Insulated Gate Bipolar Transistors (IGBT).

The control unit 13 is configured to control switching of the semiconductor switches based on the DC side voltage to generate the current waveform.

The power conversion system 1 may form part of an electrolyser system 3 also comprising an electrolyser 9 connected to the DC side 6 of the rectifier 5. The electrolyser 9 is connected to the DC link 11 and powered by the rectifier 5. The first active filter unit 7 is connected to the DC link 11 in parallel with the electrolyser 9.

Fig. 2 shows one exemplary realisation of the first active filter unit 7. The exemplified first active filter unit 7 comprises a half-bridge circuit including an LC tank indicated by the capacitor C and the inductor L. The half-bridge circuit includes two semiconductor switches Si and S2. The two semiconductor switches Si and S2 are controlled by the control unit 13. The capacitor C is connected across the two semiconductor switches S₁ and S2.

The inductor L is connected between the two semiconductor switches Si, S2 and the first DC terminal 5d of the rectifier 5.

The LC tank may comprise a single inductor L. The single inductor L may comprise a ferrite core and coils wound around the ferrite core.

Fig. 3 shows an example of a power conversion system 1' which in addition to the configurations described with reference to Figs 1 and 2, comprises a second active filter unit 7-1. The second active filter unit 7-1 is parallel connected with the first active filter unit 7.

The second active filter unit 7-1 is in the example controlled by the same control unit 13 as the first active filter unit. The two active filter units 7 and 7-1 share the same control signals from the control unit 13.

In case of more than two active filter units connected in parallel with each other, the control unit 13 may be configured to control all the active filter units with the same control signals.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power conversion system (1; 1') for powering an electrolyser (9), comprising:
a rectifier (5) having a DC side (6) comprising a first DC terminal (5d) and a second DC terminal (5e), and
a first active filter unit (7) comprising a first terminal (7a) connected to the first DC terminal (5d) and a second terminal (7b) connected to the second DC terminal (5e).

2. The power conversion system (1; 1') as claimed in claim 1, wherein the rectifier (5) is a low voltage rectifier.

3. The power conversion system (1; 1') as claimed in claim 1 or 2, wherein the rectifier (5) is a thyristor rectifier.

4. The power conversion system (1; 1') as claimed in claim 1 or 2, wherein the rectifier is a diode rectifier.

5. The power conversion system (1; 1') as claimed in any of the preceding claims, wherein the rectifier (5) is a three-phase rectifier.

6. The power conversion system (1') as claimed in any of the preceding claims, wherein the power conversion system (1') comprises a second active filter unit (7-1) connected in parallel with the first active filter unit (7).

7. The power conversion system (1; 1') as claimed in any of the preceding claims, wherein each active filter unit (7) comprises a half-bridge circuit including an LC tank.

8. The power conversion system (1; 1') as claimed in claim 7, wherein the half-bridge circuit comprises transistors, such as metal-oxide semiconductor field-effect transistors, MOSFET.

9. The power conversion system (1; 1') as claimed in any of the preceding claims comprising a control unit (13) configured to, based on a DC side voltage, control each active filter unit (7; 7-1) to generate a current waveform with opposite phase relative to the DC side voltage to compensate for ripple on the DC side voltage.

10. An electrolyser system (3) comprising:
the power conversion system (1; 1') as claimed in any of the preceding claims, and
an electrolyser (9) connected in parallel with each active filter unit (7; 7-1).
